# EUROPÄISCHE PATENTANMELDUNG

(11) **EP 0 688 947 A1**
(43) Veröffentlichungstag der Anmeldung: **27.12.1995**
(21) Anmeldenummer: 95109433.3
(22) Anmeldetag: 19.06.1995
(51) Int. Cl.: F02K 9/72

(54) **Einspritzsystem für Hybridraketentriebwerke**

(30) Priorität: 24.06.1994 DE 4422195
(71) Anmelder: Stinnesbeck, Thomas L., Dr., D-53547 Hümmerich (DE)
(72) Erfinder: Stinnesbeck, Thomas L., Dr., D-53547 Hümmerich (DE)

(57) **Zusammenfassung**

Die Erfindung bezieht sich auf ein Einspritzsystem für Hybridraketentriebwerke, welches den Einsatz von Hybridraketen auch für große und schubstarke Triebwerke möglich macht.

Das Einspritzsystem besteht aus einer Vielzahl von Kanälen (2) (Röhrchen oder einfach nur Bohrungen), welches die flüssige Komponente von der Brennkammerperipherie durch den Feststoffblock (3) radial an die Brennfläche eines Innenbrenners heranführt, wodurch eine optimale Durchmischung und damit vollständige Verbrennung von Brennstoff und Oxydator erreicht wird.

Je mehr solcher Kanäle vorgesehen sind, desto besser erfolgt die Durchmischung von Brennstoff und Oxydator und desto vollständiger die Verbrennung.

Menge, Anordnung und Ausführung des Kanalsystems ermöglichen ein konstruktiv vorherbestimmtes Abbrennverhalten des Treibstoffblockes.

Der Transport des Oxidators zum Kanalsystem erfolgt vorteilhaft durch eine Anzahl Fallrohre an der Innen- oder Außenseite der Brennkammer, in denen gleichzeitig eine Zuflußsteuerung des Oxidators erfolgen kann.

## Beschreibung

### Stand der Technik

Nahezu alle heute im Einsatz befindlichen Raketen sind chemischer Natur. Chemische Raketentriebwerke erzeugen ihren Schub durch Verbrennung eines geeigneten Brennstoffes mit einem geeigneten Oxydator. Die hierbei freigesetzte Energie dient zur Beschleunigung der Verbrennungsprodukte entgegen der Flugrichtung, wodurch ein Vortrieb (Schub) erzeugt wird. Technisches Ziel ist die Maximierung der Gasaustrittsgeschwindigkeit. Limitierende Faktoren in der Leistungssteigerung eines chemischen Raketentriebwerkes sind besonders der Energieinhalt der Treibstoffe, das Molekulargewicht der Verbrennungsprodukte, die Effizienz der Verbrennung sowie einige technische Faktoren (z.B. Druck- und Temperaturbeständigkeit der Brennkammer). Chemische Raketentriebwerke lassen sich nach ihrer Bauart grob einteilen in Feststoff- und Flüssigkeitstriebwerke.

Im Feststofftriebwerk sind Brennstoff und Sauerstoffträger innig miteinander vermengt. Feststofftriebwerke sind konstruktiv einfach gebaut, sind jedoch im Abbrennprozess kaum regelbar und potentiell explosiv. Außerdem sind die erreichbaren Ausströmgeschwindigkeiten durch das hohe Molekulargewicht der Verbrennungsprodukte und den niedrigen Energiegehalt der Brennstoffe limitiert.

Flüssigkeitstriebwerke tragen diese Limitierungen nicht. Hier liegen Oxydator und Brennstoff (z.B. H₂ und O₂) flüssig vor. Flüssigkeitstriebwerke sind jedoch konstruktiv komplex, speziell durch die erforderlichen Kühlmaßnahmen an der Brennkammer.

Eine Zwischenstellung nehmen sog. Hybridraketen ein. Hier liegt die eine Komponente (meist der Brennstoff) fest, die andere flüssig vor.

Feststofftank und Brennkammer sind bei Hybridraketen identisch. Der meist als Hohlzylinder ausgeführte Feststoff, in dessen Innerem die Verbrennung stattfindet (Innenbrenner), schützt gleichzeitig durch den noch nicht verbrannten Treibstoff die Brennkammer gegen Temperatur und Druck. Die flüssige Komponente (der Oxidator) wird zumeist über eine Art Brausekopf am oberen Abschluß der Brennkammer (u. zusätzlich in einen evtl. vorhandenen Nachbrenner) eingespritzt. Einspritzsysteme nach dem Stand der Technik werden u.a. beschrieben in US-Pat. 3,557,556 (in einer Ausführung als getrennt regelbarer quadrilateraler Multiport) oder in US-Pat. 3,789,610 (hier mit brennfolgemäßig vorgeschaltetem Feststoffmotor und einer Ausführung des Hybridtreibstoffblockes als dendritischer Innenbrenner). Diese beiden Patente beschreiben Innenbrenner. Eine weitere Variante der kopfseitigen Einspritzung, diesmal bei einem Stirnbrenner, beschreibt US-Pat. 3,715,888. Hierin wird der Oxydator durch eine oder mehrere in Längsachse angeordnete, dem Treibstoffblock innenliegende Zuführungen geleitet, welche sich im Brennvorgang auflösen sollen.

Als Brennstoff wird in der Literatur speziell Polyäthylen (evtl. in Vermischung mit Aluminiumpulver zur Leistungssteigerung) vorgeschlagen. PE verbrennt hochenergetisch und liefert leichte Verbrennungsprodukte.

Das Hybridtriebwerk vereinigt somit die Vorzüge des Feststofftriebwerkes (einfache Konstruktion, preiswerte Brennstoffe) mit den Vorteilen des Flüssigkeitstriebwerkes (Regelbarkeit, hohe Leistungsfähigkeit). Ferner trägt es zur Sicherheit bei, da es nicht explodieren kann. Die Treibstoffblöcke sind ungefährlich zu handhaben und unbegrenzt lagerfähig. Nicht zuletzt aus diesen Gründen wird dem Hybridtriebwerke (als relativ später Entwicklung in der Raketentechnik) eine große Zukunft vorhergesagt.

### Kritik am Stand der Technik

Hybridtriebwerke wurden bisher nur experimentell in kleinen und schubschwachen Triebwerken eingesetzt. Beim Einsatz in großen Triebwerken erweisen sich die Einspritzsysteme nach dem Stand der Technik als limitierende Faktoren der Triebwerkseffizienz, denn speziell im unteren Teil des Treibstoffblockes findet keine bzw. eine nur unzureichende Kontaktierung zwischen Brennstoff und Oxydator statt. Somit wird die Verbrennung uneffizient, das richtige Durchmischungsverhältnis der Komponenten zueinander kann nicht gewährleistet werden, Treibstoff verdampft unverbrannt etc. Ferner werden nur niedrige Treibstoffregressionsraten erreicht. Außerdem tritt im Abbrand bei größer werdender Brennfläche eine relative Unterversorgung derselben mit Oxydator auf. Die technische Problematik beim Übergang von kleinen auf große Hybridtriebwerke findet der interessierte Leser gut beschrieben in dem Buch US-B: Sutton, G.P.: Rocket Propulsion Elements, 6. Ausg., 1992, John Wiley & Sons, S. 216-217, 390-391, 502-521. Nach dem Stand der Technik versucht man die vorbeschriebenen Probleme durch sog. Multiportansätze zu lösen, d.h. durch die Gestaltung mehrerer Brennkammern innerhalb eines gemeinsamen Treibstoffblockes (vergl. hierzu auch Sutton, S. 597 und S. 517 und vorzitiertes US-Pat. 5,557,556). Diese Konstruktionen werfen jedoch wiederum eigene Probleme auf, speziell das der nicht vollständigen Treibstoffutilisation bei nicht kreisförmig ausgeführten Ports (für diesen speziellen Fall wird in US-Pat. 3,494,286 ein Verbesserungsvorschlag auf der Grundlage beabsichtigter Kavitationen gemacht).

Erstrebenswert wäre es jedoch, ein Einspritzsystem zu konstruieren, welches bei einfacher Brennkammergeometrie den Oxydator während des gesamten Brennvorganges möglichst gleichmäßig über die gesamte Brennfläche verteilt und hohe Regressionsraten ermöglicht.

### Erfindung

Die Erfindung betrifft ein Einspritzsystem für Hybridraketentriebwerke, bei dem die flüssige Komponente **(1)** (meist der Oxydator in Form von flüssigem Sauerstoff) durch eine Vielzahl kleiner, röhrenförmiger Kanäle bzw. Bohrungen **(2)** *von außen durch* den Treibstoffblock **(3)** und ggf. auch durch die Brennkammerwand **(4)** in den Verbrennungsraum eines Innenbrenners radial auf diesen zulaufend **(5)** geführt wird, sodaß die Verlaufsrichtung der Kanäle im Treibstoffblock die Hauptströmrichtung der Feuergase an der jeweiligen Austrittsöffnung winklig schneidet oder orthogonal zu dieser steht. Je mehr solche Kanäle vorgesehen sind, desto gleichmäßiger erfolgt die Kontaktierung zwischen Oxydator und Brennstoff und desto effizienter wird damit die Verbrennung. Der Vielzahl der Kanäle entspricht eine Vielzahl örtlicher Verbrennungsherde. Dies ermöglicht hohe Treibstoffregressionen.

Durch Hinzuschalten oder Abschalten einzelner Kanäle oder Kanalverbände während der Verbrennung oder durch Variation ihrer Geometrie (Erweiterung oder Verengung ihres Lumens an bestimmten Stellen innerhalb des Treibstoffblockes, Häufung von Kanälen am unteren Ende des Blockes zur Nachverbrennung von Treibstoff etc.) kann der Abbrennprozess des Treibstoffblockes und damit auch der Schub des Triebwerkes nahezu beliebig gesteuert werden. Einzelne Kanäle können auch im Treibstoffblock blind enden **(6)** und werden erst bei fortschreitender Verbrennung durch Freilegung aktiviert.

Die vorbeschriebenen zuführenden, am besten röhrenförmigen Kanäle sind typischerweise als Bohrungen direkt durch den Treibstoffblock, also ohne Begrenzung gegen den Feststoff, oder auch als Röhrchen (z.B. mit Metallmantel) ausgeführt. Auch eine spiralförmige Ausgestaltung zur Erzeugung einer Drallzerstäubung am Austrittspunkt des Oxydators in den Verbrennungsraum kommt in Frage. Man kann auch viele kleinlumige Röhren über die gesamte Abbrennfläche verteilen und einen geringen Einspritzüberdruck wähen, sodaß es zu einem schleierförmigen Überzug der gesamten Brennfläche mit Oxydator kommt. Die Durchmischung von Brennstoff und Oxydator wäre dann an der Brennfläche so innig wie bei einem Feststofftriebwerk.

Die Zuführung des Oxydators zu den einzelnen Einspritzkanälen erfolgt vorteilhaft durch eine Anzahl von Fallrohren **(7)**, die längs an der Außen- (oder Innen-) wand der Brennkammer verlaufen und die jeweils eine größere Gruppe von Einspritzkanälen versorgen. Der Zufluß zu einem einzelnen Fallrohr kann durch Ventile typischerweise an dessen oberem Ende oder in dessen Verlauf geregelt werden. Auch Rückschlagventile können hier nach Bedarf angeordnet werden. Die Zuführrohre können selbstverständlich auch als Steigrohre ausgeführt sein, wenn vorgesehen ist, daß der Oxydator vor seiner Verbrennung zur Kühlung der Düse (nach den bekannten Methoden) verwendet werden soll.

In der Anordnung der Kanäle zueinander innerhalb einer Querschnittsebene empfehlen sich ungerade, unsymetrische Anordnungen, wobei ein Strahl jeweils den gegenüberliegenden Teil des Treibstoffblockes trifft und so eine Aufprallzerstäubung am Treibstoff erfährt, oder aber gerade, symetrische Anordnungen, wohei sich einzelne Strahlen im Inneren der Brennkammer kreuzen und so eine Zerstäubung bewirken. Bei der ersteren Anordnung kann es sinnvoll sein, im Treibstoffblock an den Aufprallstellen Kuhlen vorzusehen, die die Verbrennungsoberfläche vergrößern, die letztere Anordnung eignet sich besonders zur Nachverbrennung unverbrannt verdampfter Treibstoffanteile in einem Nachbrenner bzw. im unteren Blockbereich.

In jedem Fall geht das Einspritzsystem, also die Kanäle, ob aus Metall oder nur gebohrt, im fortschreitenden Verbrennungsprozeß verloren. Die Austrittsöffnungen werden jedoch durch den Einspritzüberdruck des Oxydators und dessen kühlende Wirkung offengehalten. Sollten sich einzelne Kanäle tatsächlich zusetzen, so werden sie im fortschreitenden Verbrennungsprozeß wieder freigebrannt.

Selbstverständlich ist das vorbeschriebene Einspritzsystem gleichermaßen auch für andere Brennkammergeometrien, z.B. für Sternbrenner, Dendriten oder kugelförmige Brennkammern abwandelbar, solange es sich um Innenbrenner handelt.

### Vorteile

Das oben beschriebene Einspritzsystem ermöglicht nunmehr auch die konstruktiv einfache (und damit kostengünstige) technische Realisierung großer und schubstarker Hybridraketen mit deren oben ausführlich beschriebenen Vorteilen und ohne den Nachteil einer unvollständigen und damit uneffizienten Verbrennung des Treibstoffes.

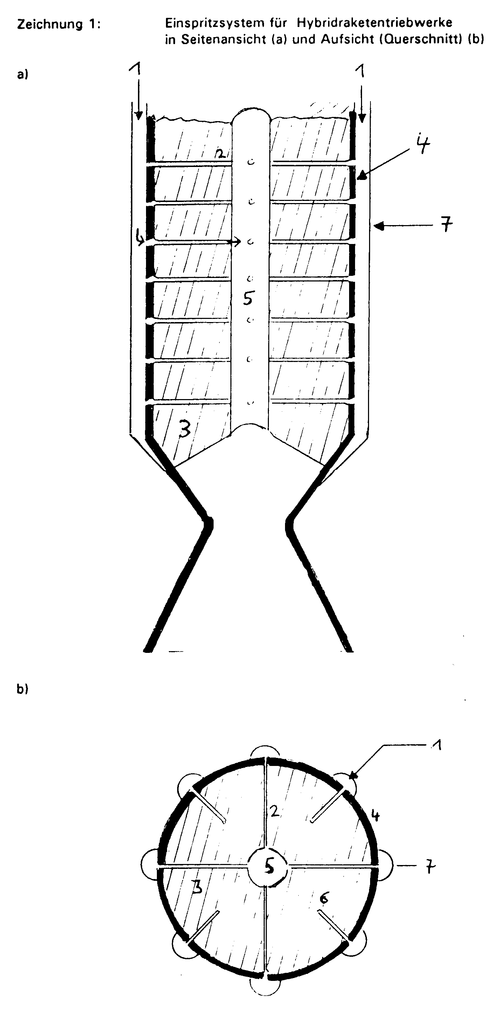

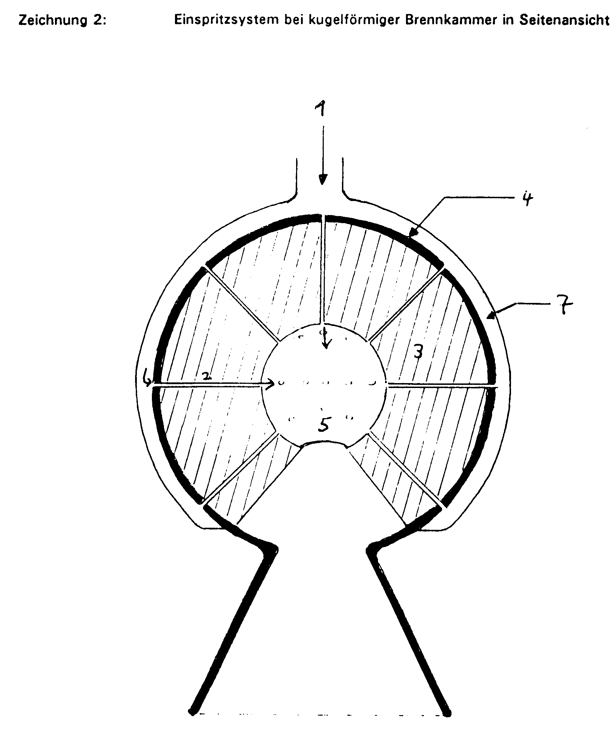

## Patentansprüche

1. Einspritzsystem für Hybridraketentriebwerke, dadurch gekennzeichnet,
- daß die flüssige Komponente durch eine Vielzahl kleiner Kanäle **(2)** durch die noch unverbrannten Brennstoffanteile, also durch den Brennstoffblock **(3)** an die Brennfläche eines Innenbrenners herangeführt wird, wodurch an jeder Stelle der Brennoberfläche ein für die Verbrennung optimales Durchmischungsverhältnis von Brennstoff und Oxydator erreicht wird
- daß die vorbeschriebenen Kanäle von der Brennkammerperipherie radial auf das Brennkammerinnere zulaufen
- daß die vorbeschriebenen Kanäle mehrheitlich in ihrer Verlaufsrichtung die Strömungsrichtung der austretenden Brenngase winklig schneiden oder orthogonal zu dieser stehen, daß also mehrheitlich keine Kopfeinspritzung erfolgen soll
- daß die vorbeschriebenen Kanäle entweder als einfache Bohrungen durch den Feststoff, oder aber als Röhrchen mit einem Mantel aus Metall oder anderen geeigneten Stoffen ausgeführt sind
- daß das vorbeschriebene System von Kanälen während des Verbrennungsprozesses verloren geht
- daß die Anordnung der Kanäle durch lokale Gruppierung, Häufung, Lumenveränderung oder blindes Enden in einem noch unverbrannten Teil des Feststoffes mit späterer Freilegung ihrer Öffnungen durch den Verbrennungsprozeß dem gewünschten Abbrennverhalten und der Geometrie des Feststoffes Rechnung trägt
- daß die Kanäle in Gruppen, die einzeln oder in ihrer Gesamtheit reguliert werden können, mit Oxydator versorgt werden

2. Einspritzsystem für Hybridraketentriebwerke nach Anspruch 1 dadurch gekennzeichnet
- daß die Versorgung einzelner Kanalgruppen mit Oxydator vorteilhaft durch Fallrohre (7) oder Steigrohre am Außen- oder Innenrand der Brennkammer erfolgt, deren Zufluß einzeln oder in ihrer Gesamtheit geregelt werden kann
